# EUROPEAN PATENT APPLICATION

(11) **EP 4 790 087 A1**
(43) Date of publication of application: **12.08.2026**
(21) Application number: 26156952.9
(22) Date of filing: 06.02.2026
(51) Int. Cl.: C08J 11/26

(54) **METHOD FOR RECYCLING POLYURETHANE MATERIAL**

(30) Priority: 06.02.2025 US 202563754736 P; 19.12.2025 TW 114150133
(71) Applicant: National Taiwan University, Taipei City 106 (TW)
(72) Inventor: WU, Chia-Wen, 10617 Taipei City (TW); LIAO, Wei-Sheng, 10617 Taipei City (TW); LIN, Yi-Chuan, 10617 Taipei City (TW)
(74) Representative: Stöckeler, Ferdinand

(57) **Abstract**

A method for recycling a polyurethane material includes subjecting a polyurethane material to a depolymerization reaction with lactic acid to obtain a polyol product. The depolymerization reaction is conducted at a temperature ranging from 90 °C to 150 °C under normal pressure. A weight ratio of the polyurethane material to the lactic acid ranges from 1:20 to 3:1.

## Description

The present invention relates to a method for recycling a polymer material, more particularly to a method for chemically recycling polyurethane.

Polyurethane products are objects produced using polyurethane (abbreviated as PU) as a primary material and by processing and manufacturing, for example, textiles, mattresses, footwear products, thermal insulation components, packaging foams, etc., which are widely used in daily life. With the increasing prevalence of the polyurethane products, the environmental impact caused by discarded polyurethane products generated after consumer use, polyurethane scraps produced during manufacturing of the polyurethane products, and industrial polyurethane waste, has become increasingly evident.

In conventional chemical recycling treatments of polyurethane, methods such as alcoholysis or acidolysis are mostly adopted to convert polyurethane into reusable raw materials. Using a diol as a depolymerizing agent to perform the alcoholysis of polyurethane converts polyurethane into recycled polyols. Using a dicarboxylic acid as a depolymerizing agent to perform the acidolysis of polyurethane converts polyurethane into polyester polyols. Both the recycled polyols and the polyester polyols can be reused in the chemical industry.

In view of the increasing attention to the demand for chemical recycling treatments of polyurethane, it is necessary to provide a more efficient treatment method for industrial application, so as to achieve purposes of waste management of polyurethane materials, a circular economy, and sustainable utilization of resources.

Therefore, an object of the present invention is to provide a method for recycling a polyurethane material.

According to an aspect of the present invention, there is provided a method for recycling a polyurethane material according to claim 1.

It is to be understood that, if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to", and that the word "comprises" has a corresponding meaning.

Unless otherwise defined, all technical and scientific terms used herein have the meaning commonly understood by a person skilled in the art to which the present invention belongs. One skilled in the art will recognize many methods and materials similar or equivalent to those described herein, which could be used in the practice of the present invention. Indeed, the present invention is in no way limited to the methods and materials described.

The present invention provides a method for recycling a polyurethane material, which includes subjecting a polyurethane material to a depolymerization reaction with lactic acid to obtain a polyol product.

In the present invention, the term "polyurethane material" means any substance containing polyurethane, which may be in a raw material form, a product form or a waste form. According to the present invention, the polyurethane material may be an amorphous polyurethane resin material, a semi-finished polyurethane product or a polyurethane product having a definite shape, and a polyurethane waste, polyurethane scraps or defective polyurethane products generated during the production of a polyurethane product. The polyurethane resin material may include, but not limited to, a polyurethane adhesive or a blended resin material formed by mixing polyurethane with other polymer compound(s) such as polyethylene terephthalate. The polyurethane product may include, but not limited to, a rigid foam made of thermosetting polyurethane, a flexible foam made of thermosetting polyurethane, or an elastic fiber made of thermoplastic polyurethane.

The reasons why the present invention enables a polyol to be obtained from a polyurethane material by using lactic acid will be described below in terms of chemical structure and substance form. In terms of chemical structure, a hydroxyl group (-OH) and a carboxyl group (-COOH) contained in the lactic acid molecule may react with the polyurethane material via alcoholysis and acidolysis, respectively, which results in cleaving the urethane bond (-NHCOO-) in the polyurethane material, thereby converting the polyurethane material into the polyol. Therefore, the polyol product obtained in the present invention includes the polyol obtained by subjecting the polyurethane material to a depolymerization reaction. In particular, the polyol product may directly react with diisocyanate to form polyurethane. In addition, if the polyurethane material contains a urea bond, the lactic acid may also cause the cleavage of the urea bond.

In terms of substance form, the polyurethane material is usually in a solid state, and the lactic acid is in a liquid state at normal pressure (1 atmosphere) and room temperature (approximately 25°C). Due to the difference in the physical states of the two substances, it ensures that the lactic acid and the polyurethane material come into sufficient contact and react, thereby facilitating the acquisition of the polyol from the polyurethane material.

According to the present invention, the depolymerization reaction may be carried out using techniques well known and commonly employed by those skilled in the art. It can be understood that operating conditions regarding the depolymerization reaction may further vary based on factors, such as the amount ratio of the polyurethane material to the lactic acid, so as to achieve the optimal depolymerization effect. The selection of these operating conditions may be routinely determined by those skilled in the art.

In general, the depolymerization reaction proceeds more efficiently at higher temperatures. According to the present invention, in order to achieve the purpose of energy saving and carbon reduction, the depolymerization reaction is conducted at a temperature ranging from 90 °C to 150 °C . Since the method of the present invention uses the lactic acid as a depolymerizing agent, even under such reaction condition, the method of the present invention may efficiently cause the polyurethane material to undergo depolymerization. In certain embodiments, the depolymerization reaction is carried out as follows: the polyurethane material and the lactic acid are mixed and then heated to a temperature ranging from 90 °C to 150 °C . In other embodiments, the depolymerization reaction is carried out as follows: the lactic acid is heated to a temperature ranging from 90 °C to 150 °C , and then the lactic acid is mixed with the polyurethane material. In particular, performing the depolymerization reaction in this manner (i.e., first heating the lactic acid to the desired temperature) is advantageous for accurately recording the required reaction time.

In general, the depolymerization reaction proceeds more efficiently at higher pressure. According to the present invention, in order to achieve the purpose of energy saving and carbon reduction, the depolymerization reaction is conducted under normal pressure. Since the method of the present invention uses the lactic acid as the depolymerizing agent, even under such reaction condition, the method of the present invention may efficiently cause the polyurethane material to undergo depolymerization. In certain embodiments, the depolymerization reaction is carried out at a temperature ranging from 90 °C to 150 °C under normal pressure. In certain embodiments, the depolymerization reaction is carried out as follows: the polyurethane material and the lactic acid are mixed under normal pressure, and then heated to a temperature ranging from 90 °C to 150 °C . In other embodiments, the depolymerization reaction is carried out as follows: the lactic acid is heated to a temperature ranging from 90 °C to 150 °C under normal pressure, and then the lactic acid is mixed with the polyurethane material.

In certain embodiments, a weight ratio of the polyurethane material to the lactic acid ranges from 1:20 to 3:1. In certain embodiments, the weight ratio of the polyurethane material to the lactic acid ranges from 1:20 to 2.5:1. In certain embodiments, the weight ratio of the polyurethane material to the lactic acid is 1:20. In particular, when the weight ratio of the polyurethane material to the lactic acid is 1:20, the lactic acid may more effectively contact with the polyurethane material, and the polyol product may be more rapidly obtained. In certain embodiments, the weight ratio of the polyurethane material to the lactic acid ranges from 2.5:1 to 3:1. Particularly, when the weight ratio of the polyurethane material to the lactic acid ranges from 2.5:1 to 3:1, the usage costs of the lactic acid may be saved, and it is more suitable for large-scale operations. In certain embodiments, the weight ratio of the polyurethane material to the lactic acid is 2.5:1.

The present invention will be further described by way of the following examples. However, it should be understood that the following examples are solely intended for the purpose of illustration and should not be construed as limiting the present invention in practice.

General experimental materials: in each of the following examples and comparative examples, the source of the polyurethane material was a flexible polyurethane foam made of thermosetting polyurethane, and the source of the lactic acid was purchased from Thermo Fisher Scientific Inc. and had a purity from 85.0% to 90.0%.

### [Example 1]

2.5g of a polyurethane material and 1g of lactic acid (used as a depolymerizing agent) were added into a reaction vessel and stirred, so that the solid polyurethane material was mixed with the liquid lactic acid. Then, the reaction vessel was heated using an external heating source. When the temperature of the polyurethane material and the lactic acid in the reaction vessel reached 150 °C , the temperature was recorded as the reaction temperature, and this is taken as the starting point for timing the reaction between the polyurethane material and the lactic acid. When it is observed that the solid polyurethane material was completely transformed into the liquid state in the reaction vessel (i.e., the substances in the reaction vessel were entirely in the liquid state), it indicated that the reaction was complete, and this was recorded as the end point for timing. The reaction time was determined as the interval between the starting point for timing and the end point for timing.

### [Example 2]

20g of lactic acid was added into a reaction vessel and stirred, and the reaction vessel was heated using an external heating source so that the temperature of the lactic acid in the reaction vessel reached and was maintained at 150 °C , and the temperature was recorded as the reaction temperature. Subsequently, 1g of a polyurethane material was added into the reaction vessel, and the polyurethane material and the lactic acid were subjected to stirring, so that the solid polyurethane material and liquid lactic acid were mixed, and this is taken as the starting point for timing the reaction between the polyurethane material and the lactic acid. When it is observed that the solid polyurethane material was completely transformed into the liquid state in the reaction vessel (i.e., the substances in the reaction vessel were entirely in the liquid state), it indicated that the reaction was complete, and this was recorded as the end point for timing. The reaction time was determined as the interval between the starting point for timing and the end point for timing.

### [Examples 3-5]

The methods of Examples 3 to 5 were substantially the same as that of Example 2, except that the reaction temperature in Example 3 was 130°C, the reaction temperature in Example 4 was 110°C, and the reaction temperature in Example 5 was 90°C.

### [Comparative Examples 1-8]

The methods of Comparatives Examples 1 to 4 were substantially carried out with reference to the methods of Examples 2 to 5, except that, in Comparatives Examples 1 to 4, diethylene glycol was used as the depolymerizing agent. In particular, in Comparatives Examples 2 to 4, it is observed that, even the reaction was conducted for 24 hours from the starting point for timing, the solid polyurethane material was still present in the reaction vessel; therefore, it is recorded as the reaction being incomplete.

The methods of Comparatives Examples 5 to 8 were substantially carried out with reference to the methods of Examples 2 to 5, except that, in Comparatives Examples 5 to 8, the maleic acid was used as the depolymerizing agent. In particular, in Comparatives Examples 6 to 8, it is observed that, even the reaction was conducted for 24 hours from the starting point for timing, the solid polyurethane material was still present in the reaction vessel; therefore, it is recorded as the reaction being incomplete.

The type of the polyurethane material, the type of the depolymerizing agent, the weight ratio the polyurethane material to the depolymerizing agent, the reaction temperature and the reaction time used in Examples 1 to 5 and Comparative Examples 1 to 8 are shown and summarized in Table 1.

Referring to Table 1, it can be seen from the experimental results of Examples 1 to 5, the method for recycling the polyurethane material of the present invention may indeed obtain the polyol product by virtue of subjecting the polyurethane material and the lactic acid to a depolymerization reaction.

Besides, in Examples 1-5, the reaction may be completed within 5 minutes to 24 hours at the temperature range of 90°C to 150°C, and the polyol product is obtained. In contrast, in Comparative Example 1, the reaction time is as long as 6 hours at 150°C, and in Comparative Examples 2 to 4 and 6 to 8, the reaction is still not complete even after being extended to 24 hours. The aforesaid experimental results demonstrate that the method for recycling the polyurethane material of the present invention may efficiently and energy-sparingly cause the polyurethane material to undergo depolymerization by using the lactic acid as the depolymerizing agent, thereby obtaining the polyol product.

**Table 1**

| | Type of polyurethane material | Type of depolymerizing agent | Weight ratio of polyurethane material to depolymerizing agent | Reaction Temp. | Reaction Time |
|---|---|---|---|---|---|
| Example 1 | Flexible polyurethane foam | Lactic acid | 2.5:1 | 150 °C | 4 hours |
| Example 2 | Flexible polyurethane foam | Lactic acid | 1:20 | 150 °C | 5 minutes |
| Example 3 | Flexible polyurethane foam | Lactic acid | 1:20 | 130 °C | 16 minutes |
| Example 4 | Flexible polyurethane foam | Lactic acid | 1:20 | 110 °C | 86 minutes |
| Example 5 | Flexible polyurethane foam | Lactic acid | 1:20 | 90 °C | 24 hours |
| Comparative Example 1 | Flexible polyurethane foam | Diethylene glycol | 1:20 | 150 °C | 6 hours |
| Comparative Example 2 | Flexible polyurethane foam | Diethylene glycol | 1:20 | 130 °C | Reaction being incomplete |
| Comparative Example 3 | Flexible polyurethane foam | Diethylene glycol | 1:20 | 110 °C | Reaction being incomplete |
| Comparative Example 4 | Flexible polyurethane foam | Diethylene glycol | 1:20 | 90 °C | Reaction being incomplete |
| Comparative Example 5 | Flexible polyurethane foam | Maleic acid | 1:20 | 150 °C | 6 minutes |
| Comparative Example 6 | Flexible polyurethane foam | Maleic acid | 1:20 | 130 °C | Reaction being incomplete |
| Comparative Example 7 | Flexible polyurethane foam | Maleic acid | 1:20 | 110 °C | Reaction being incomplete |
| Comparative Example 8 | Flexible polyurethane foam | Maleic acid | 1:20 | 90 °C | Reaction being incomplete |

In summary, the method for recycling the polyurethane material of the present invention, by using the lactic acid as the depolymerizing agent, may convert the polyurethane material into a polyol product that may be directly used for manufacturing of polyurethane. Thus, the method for recycling the polyurethane material of the present invention may efficiently recycle the discarded polyurethane material, thereby achieving the purposes of a circular economy and sustainable utilization of resources.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the invention. It should be further appreciated that in the description, various features are sometimes grouped together in a single embodiment, figure, or description thereof for the purpose of streamlining the invention and aiding in the understanding of various inventive aspects; such does not mean that every one of these features needs to be practiced with the presence of all the other features. In other words, in any described embodiment, when implementation of one or more features or specific details does not affect implementation of another one or more features or specific details, the one or more features may be singled out and practiced alone without the another one or more features or specific details. It should be further noted that one or more features or specific details from one embodiment may be practiced together with one or more features or specific details from another embodiment, where appropriate, in the practice of the invention.

## Claims

1. A method for recycling a polyurethane material, **characterized by**:
subjecting a polyurethane material to a depolymerization reaction with lactic acid to obtain a polyol product.

2. The method for recycling a polyurethane material as claimed in claim 1, wherein the depolymerization reaction is conducted at a temperature ranging from 90 °C to 150 °C .

3. The method for recycling a polyurethane material as claimed in claim 2, wherein the depolymerization reaction is conducted by mixing the polyurethane material with the lactic acid, followed by heating to the temperature ranging from 90 °C to 150 °C .

4. The method for recycling a polyurethane material as claimed in claim 2, wherein the depolymerization reaction is conducted by heating the lactic acid to the temperature ranging from 90 °C to 150 °C , followed by mixing with the polyurethane material.

5. The method for recycling a polyurethane material as claimed in any one of claims 1 to 4, wherein the depolymerization reaction is conducted under normal pressure.

6. The method for recycling a polyurethane material as claimed in any one of claims 1 to 5, wherein a weight ratio of the polyurethane material to the lactic acid ranges from 1:20 to 3:1.

7. The method for recycling a polyurethane material as claimed in claim 6, wherein the weight ratio of the polyurethane material to the lactic acid ranges from 1:20 to 2.5:1.

8. The method for recycling a polyurethane material as claimed in claim 7, wherein the weight ratio of the polyurethane material to the lactic acid is 1:20.

9. The method for recycling a polyurethane material as claimed in claim 6, wherein the weight ratio of the polyurethane material to the lactic acid ranges from 2.5:1 to 3:1.

10. The method for recycling a polyurethane material as claimed in claim 9, wherein the weight ratio of the polyurethane material to the lactic acid is 2.5:1.
